Europäisches Patentamt

European Patent Office

Office européen des brevets

(19)

(11) Veröffentlichungsnummer: **0 420 077 A2**

(12) **EUROPÄISCHE PATENTANMELDUNG**

(21) Anmeldenummer: 90118230.3

(22) Anmeldetag: 22.09.90

(51) Int. Cl.⁵: **F23Q 7/00, B60N 3/14, B60Q 3/02**

(30) Priorität: 29.09.89 DE 3932601

(43) Veröffentlichungstag der Anmeldung:
**03.04.91 Patentblatt 91/14**

(84) Benannte Vertragsstaaten:
**DE ES FR GB IT**

(71) Anmelder: **SCHOELLER & CO.
Elektrotechnische Fabrik GmbH & Co.
Mörfelder Landstrasse 115-119 Postfach 70
09 54
W-6000 Frankfurt am Main(DE)**

(72) Erfinder: **von Gaisberg, Alexander
Goethestrasse 26
W-7141 Beilstein(DE)**
Erfinder: **Merz, Klaus-Philipp, Dr.
Am Berg 55
W-7500 Karlsruhe(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

(54) **Elektrischer Zigarrenanzünder mit Beleuchtungsvorrichtung.**

(57)
2.1 Im Stand der Technik ist eine Beleuchtungsvorrichtung bekannt, bei welcher um einen elektrischen Zigarrenanzünder herum mittels eines Leuchtrings lediglich ein ringförmiger Bereich beleuchtet ist.

2.2 Um eine Beleuchtungseinrichtung für einen elektrischen Zigarrenanzünder zu schaffen, mit deren Hilfe nicht nur ein den Zigarrenanzünder umgebender Leuchtring, sondern auch der zentral liegende Betätigungsknopf beleuchtbar ist, wird erfindungsgemäß im wesentlichen vorgeschlagen, eine erste Reflexionsfläche (15), einen Lichtdurchgangssteg (25), Lichtdurchtrittsöffnungen (14) und eine zweite Reflexionsfläche (16) vorzusehen, wobei von einer Lampe (9) emittierte sowie innerhalb einer Hülsenwandung (10) zentralachsenparallel auf die erste Reflexionsfläche (15) einfallende Lichtstrahlen (L) nicht nur über den Lichtdurchgangssteg (25) in den Leuchtring (6) eingeleitet werden, sondern auch durch die Lichtdurchtrittsöffnungen (14) hindurch radial ins Innere der Beleuchtungshülse (2) auf die zweite Reflexionsfläche (16) reflektiert und von dort nach außen in einen Frontbereich (23) des Betätigungsknopfes (7) geworfen werden.

3. Erfindungsgemäß wird eine äußerst homogene Lichtverteilung über den gesamten Frontbereich des Zigarrenanzünders erreicht.

Fig. 1

## ELEKTRISCHER ZIGARRENANZÜNDER MIT BELEUCHTUNGSVORRICHTUNG

Die Erfindung betrifft einen elektrischen Zigarrenanzünder nach dem Oberbegriff des Anspruchs 3.

Aus dem DE-GM 78 19 579 ist eine Beleuchtungsvorrichtung für einen elektrischen Zigarrenanzünder bekannt, bei welchem mit Hilfe einer aus lichtleitendem Material gefertigten Kunststoffhülse nebst Leuchtring um den Handgriff des Zündsteckers herum ein ringförmiger Bereich mit gleichmäßiger Lichtverteilung erzeugt wird. Bisweilen ist es jedoch wünschenswert, daß der Zigarrenanzünder nicht nur in einem ringförmigen Bereich, sondern in seinem gesamten scheibenförmigen Frontbereich beleuchtet wird. Ein Benutzer kann dann bei Dunkelheit, insbesondere in Schrägsicht, den Zigarrenanzünder deutlicher erkennen. Außerdem kann dann ein innerhalb des Handgriffs angeordneter Betätigungsknopf mit einem beleuchtbaren Symbol versehen sein.

In der DE-PS 22 54 712 ist eine einen mit Reflexions-Prismen versehenen Leuchtring, einen Lichtleitungsansatz und eine Lampe aufweisende Beleuchtungseinrichtung für Zigarrenanzünder offenbart. Hieraus ist bekannt, daß an den am Lichtleitungsansatz vorhandenen Begrenzungswandungen das in den Lichtleitungsansatz einflutende Licht teilweise wieder in die Wandung des Lichtleitungsansatzes zurückreflektiert wird. Außerdem sind an den Reflexions-Prismen Reflexionsflächen vorgesehen, die zu einer homogenen Lichtverteilung im Leuchtring selbst beitragen.

Zudem ist aus der als Zusatzpatentschrift zur DE-PS 22 54 712 erschienenen DE-PS 25 35 080 bekannt, zur Lichteinleitung des Lampenlichtes in den Lichtleitungsansatz Prismen mit Lichtreflexionsflächen vorzusehen.

Es ist demnach Aufgabe der Erfindung, unter Vermeidung der im Stand der Technik vorhandenen Nachteile, eine Beleuchtungseinrichtung für einen elektrischen Zigarrenanzünder zu schaffen, mittels derer nicht nur ein den Zigarrenanzünder umgebender Leuchtring, sondern auch der zentral liegende Betätigungsknopf des elektrischen Zigarrenanzünders beleuchtbar ist.

Diese Aufgabe wird durch die in den nebengeordneten Ansprüchen 1 und 3 näher gekennzeichneten Merkmale gelöst.

Weitere Ausgestaltungen der Erfindung sind in den Unteransprüchen näher gekennzeichnet.

Erfindungsgemäß wird vorgeschlagen, Licht über eine Beleuchtungshülse oder einen Beleuchtungsring in den aus lichtleitendem Material gefertigten Betätigungsknopf des Zündsteckers einzuspiegeln. Von einer hinter dem Armaturenbrett eines Kraftfahrzeuges rückfrontseitig angeordneten Lampe emittiertes Licht wird hierbei mit Hilfe einer Beleuchtungshülse, einem Beleuchtungsring oder einem Lichtleiter zentralachsenparallel fortgeleitet. Eine unter einem Neigungswinkel $\alpha = 45°$ zur Senkrechten auf die Zentralachse geneigte kegelstumpfmantelförmige Reflexionsfläche sowie in einer Anzündersteckdosenwandung und in einer Zündsteckerwandung vorgesehene Lichtdurchtrittsöffnungen bewirken, daß das Licht durch die Lichtdurchtrittsöffnungen hindurch radial ins Innere der Spannhülse reflektiert werden kann. In dem aus lichtleitendem Material gefertigten Betätigungsknopf des Zündsteckers ist eine konusförmige Ausnehmung vorgesehen, wodurch eine um die Zentralachse unter einem konstanten Neigungswinkel geneigte zweite Reflexionsfläche ausgebildet ist. Diese im Inneren des Betätigungsknopfes angeordnete zweite Reflexionsfläche ist vorzugsweise unter einem Neigungswinkel von $\alpha = 45°$ parallel zur ersten Reflexionsfläche angeordnet. Damit wird ermöglicht, daß das radial ins Innere der Spannhülse einfallende Licht mittels der zweiten Reflexionsfläche wiederum zentralachsenparallel nach außen in einen Frontbereich des Betätigungsknopfes geworfen wird. Hierdurch wird in einfacher Weise eine Beleuchtung des Betätigungsknopfes gewährleistet, ohne daß die Außenabmessungen des Zigarrenanzünders geändert werden müßten. Außerdem läßt sich durch axiales Verschieben des Betätigungsknopfes die Knopfbeleuchtung ein- oder ausschalten. Auch läßt sich bei geeigneter Werkstoffauswahl eine Farbänderung im Frontbereich des Beleuchtungsknopfes erzielen.

Nach einer weiteren erfindungsgemäßen Ausführungsform sind in dem aus lichtleitendem Material gefertigten Betätigungsknopf n zweite Reflexionsflächen zirkumaxial um die Zentralachse des Zigarrenanzünders herum ausgebildet. Jede einzelne im Inneren des Betätigungsknopfes ausgebildete zweite Reflexionsfläche ist unter einem variablen Neigungswinkel Alpha zur Senkrechten auf die Zentralachse hin geneigt. Hierdurch wird vorteilhaft ermöglicht, daß das Licht gleichzeitig in jeden beliebigen Bereich des Frontbereichs des Betätigungsknopfes reflektiert werden kann.

Gemäß einem zweckmäßigen Ausführungsbeispiel sind die zweiten Reflexionsflächen in rotationssymmetrischen Gruppen angeordnet, wodurch eine äußerst homogene Lichtverteilung im Betätigungsknopf erreicht werden kann.

Weiter wird vorgeschlagen, die Radien der den kegelstumpfmantelförmigen zweiten Reflexionsflächen zugeordneten Kegelstumpfgrundkreise und/oder die Neigungswinkel der zweiten Reflexionsflächen innerhalb der rotationssymmetrisch angeordneten Gruppen von Reflexionsflächen stetig oder diskontinuierlich monoton wachsen zu lassen. Bei stetigem Anwachsen gehen die zweiten Reflexionsflächen dann ebenfalls stetig ineinander über, wobei die jeweils zugeordneten Kreisbögen unter Ausbildung einer Spiralkurve aneinander anschließen.

Nach einer weiteren vorteilhaften Ausführungsform der Erfindung ist die Beleuchtungshülse becherförmig ausgebildet, wobei die Hülsenwandung und ein Becherboden die Anzündersteckdose allseitig umfassen. Hierdurch und insbesondere wegen der vollzylinderförmigen Ausbildung des Becherbodens läßt sich eine für die Beleuchtung erforderliche Lampe zentral im Becherboden unterbringen. Damit ist auch eine allseitig homogene Lichteinleitung in die Beleuchtungshülse gewährleistet.

Nach einer weiteren Ausführungsform läßt sich die becherförmige Beleuchtungshülse gleichzeitig auch als Anzündersteckdose ausbilden. Wegen der dann nicht mehr vorhandenen metallenen Steckdose entfallen natürlich auch die in der Steckdose grundsätzlich vorzusehenen Lichtdurchtrittsöffnungen. Hierdurch werden weitere Teile eingespart.

Die Erfindung soll nachstehend anhand der schematischen Zeichnung näher beschrieben und erläutert werden.

Es zeigen:

Fig. 1 eine mediane Seitenschnittansicht des erfindungsgemäßen Zigarrenanzünders nach einer ersten erfindungsgemäßen Ausführungsform,

Fig. 2 eine Schnittansicht entlang der Schnittlinie II-II in Fig. 1,

Fig. 3 eine Ansicht von unten auf den Betätigungsknopf des elektrischen Zigarrenanzünders nach einer zweiten erfindungsgemäßen Ausführungsform,

Fig. 4 eine Seitenanschnittansicht des Betätigungsknopfes gemäß der Schnittlinie IV-IV in Fig. 3.

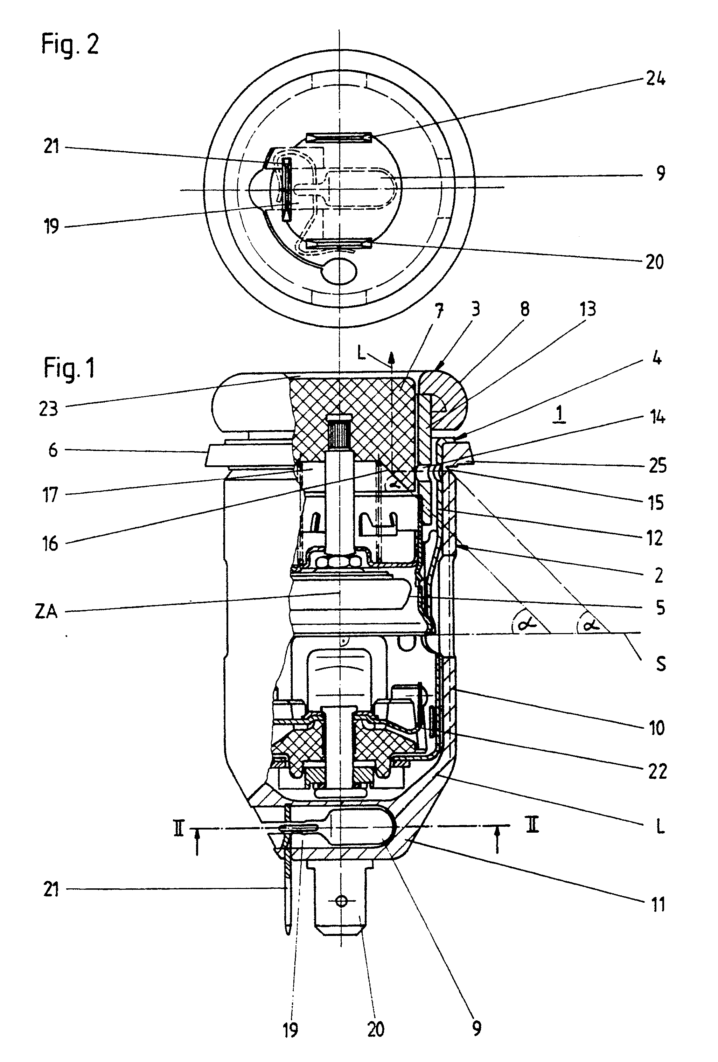

Fig. 1 zeigt eine mediane Seitenschnittansicht durch den erfindungsgemäß ausgebildeten Zigarrenanzünder gemäß einer ersten Ausführungsform. Der elektrische Zigarrenanzünder 1 weist eine Anzündersteckdose 4 auf, innerhalb derer einen Glühkopf 5 eines Zündsteckers 3 erfassende Bimetallkontaktfedern 22 in an sich bekannter Weise ausgebildet sind. Über Pluskontaktteile 20, 24 sowie ein Minuskontaktteil 21 ist der elektrische Zigarrenanzünder an die Bordnetzstromversorgung, insbesondere eines Kraftfahrzeuges, anschließbar. Die Anzündersteckdose 4 ist mit einer becherförmigen Beleuchtungshülse 2 umgeben, welche im wesentlichen eine Hülsenwandung 10 sowie einen Becherboden 11 aufweist. Im vollzylindrischen Becherboden 11 ist eine Lampenaufnahme 19 für eine zentral angeordnete Lampe 9 vorgesehen. Das in der Lampe 9 erzeugte Licht wird innerhalb der Hülsenwandung 10 achsenparallel zu einer Zentralachse ZA fortgeleitet und über einen die Hülsenwandung 10 mit dem Leuchtring 6 verbindenden Lichtdurchgangssteg 25 in den Leuchtring 6 teilweise eingeleitet. Teilweise trifft das in der Hülsenwandung 10 fortgeleitete Licht auf eine erste Reflexionsfläche 15, welche am Übergang zwischen der Hülsenwandung 10 und dem Leuchtring 6 in der Hülsenwandung 10 vorgesehen ist. Die erste Reflexionsfläche 15 ist kegelstumpfmantelförmig ausgebildet und verläuft unter einem Neigungswinkel $\alpha = 45°$ zur Senkrechten auf die Zentralachse ZA geneigt peripher um die Zentralachse ZA. In einer Anzündersteckdosenwandung 12 der Anündersteckdose 4 und in einer Zündsteckerwandung 13 des Zündsteckers 3 sind Lichtdurchtrittsöffnungen 14 vorhanden, wodurch das auf die erste Reflexionsfläche 15 einfallende Licht radial ins Innere der Beleuchtungshülse 2 durch die Lichtdurchtrittsöffnungen 14 hindurch reflektiert wird. Das somit radial in Richtung der Senkrechten S auf die Zentralachse ZA ins Innere eines in einem Haltegriff 8 druckverschiebbar angeordneten Betätigungsknopfes 7 reflektierte Licht wird an einer zweiten Reflexionsfläche 16 zentralachsenparallel nach außen in einen Frontbereich 23 des Betätigungsknopfes 7 geworfen. Gemäß der ersten in Fig. 1 gezeigten Ausführungsform der Erfindung ist an der Unterseite des Betätigungsknopfes 7 eine konusförmige Ausnehmung 17 vorhanden, wodurch die um die Zentralachse ZA zirkumaxial umlaufende sowie unter einem konstanten Neigungswinkel $\alpha = 45°$ parallel zur ersten Reflexionsfläche 15 geneigte zweite Reflexionsfläche 16 ausgebildet ist.

Fig. 2 zeigt eine Schnittansicht durch den Becherboden 11 der Beleuchtungshülse 2 entlang der Schnittlinie II-II in Fig. 1. Die in der Lampenaufnahme 19 positionierte Lampe 9 ist an ein erstes Pluskontaktteil 20 und ein Minuskontaktteil 21 elektrisch angeschlossen und zentral radial im Becherboden 11 ausgerichtet. Hierdurch ist eine homogene Lichteinleitung in die Hülsenwandung 10 gewährleistet.

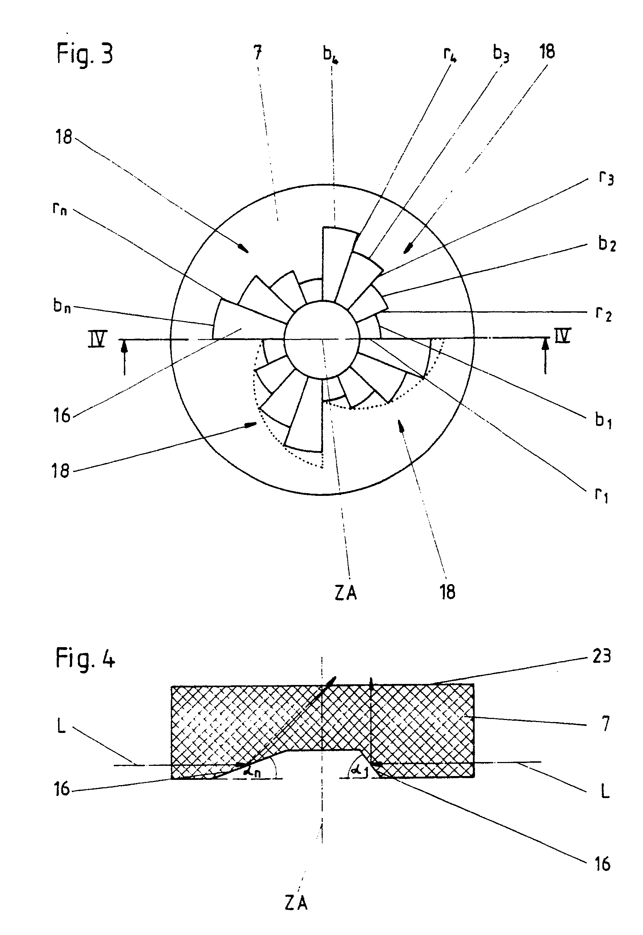

Fig. 3 zeigt eine Ansicht auf die Unterseite des nach einer zweiten erfindungsgemäßen Ausführungsform ausgebildeten Betätigungsknopfes 7. Gemäß dieser weiteren Ausfürungsform sind in diesem Ausführungsbeispiel sechzehn zweite Reflexionsflächen 16 zirkumaxial um die Zentralachse ZA angeordnet. Hierbei sind die zweiten Reflexionsflächen 16 in vier Gruppen 18 aus jeweils vier zweiten Reflexionsflächen 16 rotationssymmetrisch um die Zentralachse ZA angeordnet. Jede einzelne zweite Reflexionsfläche 16 ist in Form einer unter einem variablen Neigungswinkel $\alpha_n$ (n = 1 bis 16) zur Senkrechten S auf die Zentralachse ZA geneigt. Außerdem ist jede Reflexionsfläche 16 als Teilfläche einer längs eines Kreisbogenstücks bn (n = 1 bis 16) verlaufenden Kegelstumpfmantelfläche ausgebildet, wobei das jeweilige Kreisbogenstück $b_n$ durch den Radius $r_n$ eines jeweils zugeordneten Kegelstumpfgrundkreises festgelegt ist. Innerhalb jeder Gruppe 18 aus vorliegend vier zweiten Reflexionsflächen 16 wachsen die Radien $r_n$ und die Neigungswinkel $\alpha_n$ zirkumaxial monoton an. Neben dem in Fig. 3 gezeigten diskontinuierlichen Anwachsen der Radien $r_n$ und der Neigungswinkel $\alpha_n$ ist auch ein diskontinuierlich stetiges Anwachsen der Radien $r_n$ und der Neigungswinkel $\alpha_n$ möglich, wodurch die innerhalb einer Gruppe 18 stetig ineinander übergehenden Kreisbogenstücke $b_n$ spiralförmig ausgebildet sind. Durch diese Ausführungsform läßt sich über den gesamten Frontbereich 23 des Betätigungsknopfes 7 eine homogene Lichtverteilung erreichen.

Fig. 4 zeigt eine Seitenschnittansicht des Betätigungsknopfes 7 entlang der Schnittlinie IV-IV in Figur 3. Entsprechend der unterschiedlichen Neigungswinkel $\alpha_1,... \alpha_n$ der zweiten Reflexionsflächen 16 werden die Lichtstrahlen L in verschiedene Gebiete des Frontbereichs 23 des Betätigungsknopfes 7 reflektiert.

## Ansprüche

1. Elektrischer, insbesondere im Armaturenbrett eines Kraftfahrzeuges zu installierender Zigarrenanzünder, mit einer einen Zündstecker nebst Glühkopf aufnehmenden Anzündersteckdose sowie mit einer zwischen Anzündersteckdose und Armaturenbrett angeordneten lichtleitenden Beleuchtungshülse mit mindestens einer an einer Hüsenwandung vorgesehenen Licht-Reflexionsfläche, wobei die Beleuchtungshülse vorderfrontseitig einen flanschförmig anschließenden Leuchtring und rückfrontseitig eine Lampe aufweist, dadurch gekennzeichnet, daß an der Hülsenwandung (10) der Beleuchtungshülse (2) mindestens eine, zumindest teilperipher längs eines Kreisbogens um eine Zentralachse (ZA) umlaufende sowie unter einem Neigungswinkel $\alpha = 45°$ zur Senkrechten (S) auf die Zentralachse (ZA) geneigte kegelstumpfmantelförmige erste Reflexionsfläche (15) und ein die Hülsenwandung (10) mit dem Leuchtring (6) verbindender Lichtdurchgangssteg (25) ausgebildet ist, daß in einer Anzündersteckdosenwandung (12) und in einer Zündsteckerwandung (13) Lichtdurchtrittsöffnungen (14) angeordnet sind, und daß an einem aus lichtleitendem Material gefertigten Betätigungsknopf (7) des Zündsteckers (3) unter Ausbildung einer um die Zentralachse (ZA) zirkumaxial umlaufenden sowie unter einem Neigungswinkel $\alpha$ geneigten zweiten Reflexionsfläche (16) eine konusförmige Ausnehmung (17) zur Einleitung der Lichtstrahlen (L) außer in den Leuchtring (6) auch in den Betätigungsknopf (7) vorgesehen ist.

2. Elektrischer Zigarrenanzünder nach Anspruch 1, dadurch gekennzeichnet, daß die zweite Reflexionsfläche (16) unter einem Neigungswinkel $\alpha = 45°$ parallel zur ersten Reflexionsfläche (15) zur Einleitung der Lichtstrahlen (L) in den Betätigungsknopf (7) geneigt ist.

3. Elektrischer Zigarrenanzünder nach dem Oberbegriff des Anspruchs 3, dadurch gekennzeichnet, daß an der Hülsenwandung (10) der Beleuchtungshülse (2) mindestens eine, zumindest teilperipher längs eines Kreisbogens um eine Zentralachse (ZA) umlaufende sowie unter einem Neigungswinkel $\alpha = 45°$ zur Senkrechten (S) auf die Zentralachse (ZA) geneigte kegelstumpfmantelförmige erste Reflexionsfläche (15) und ein die Hülsenwandung (10) mit dem Leuchtring (6) verbindender Lichtdurchgangssteg (25) ausgebildet ist, daß in einer Anzündersteckdosenwandung (12) und in einer Zündsteckerwandung (13) Lichtdurchtrittsöffnungen (14) angeordnet sind, daß an einem aus lichtleitendem Material gefertigten Betätigungsknopf (7) des Zündsteckers n (n = 1,2,3...) zweite Reflexionsflächen (16) zur Einleitung der Lichtstrahlen (L) außer in den Leuchtring (6) auch in den Betätigungsknopf (7) zirkumaxial um die Zentralachse (ZA) herum ausgebildet sind, daß jede einzelne zweite Reflexionsfläche (16) in Form einer unter einem Neigungswinkel ($\alpha_n$) zur Senkrechten (S) auf die Zentralachse (ZA) geneigten sowie längs eines Kreisbogenstücks ($b_n$) verlaufenden Teils einer Kegelstumpfmantelfläche ausgebildet ist, und daß das jeweilige Kreisbogenstück ($b_n$) durch den Radius ($r_n$) eines jeweils zugeordneten Kegelstumpfgrundkreises festgelegt ist.

4. Elektrischer Zigarrenanzünder nach Anspruch 3, dadurch gekennzeichnet, daß die n zweiten Reflexionsflächen (16) in rotationssymmetrischen Gruppen (18) von zweiten Reflexionsflächen (16) angeordnet sind.

5. Elektrischer Zigarrenanünder nach Anspruch 4, dadurch gekennzeichnet, daß innerhalb der Gruppen (18) der zweiten Reflexionsflächen (16) die Radien ($r_n$) und/oder die Neigungswinkel ($\alpha_n$) zirkumaxial monoton wachsen.

6. Elektrischer Zigarrenanzünder nach einem der Ansprüche 3 bis 5, dadurch gekennzeichnet, daß die zweiten Reflexionsflächen (16) stetig ineinander übergehen, wobei die jeweiligen Kreisbögen ($b_n$) spiralförmig aneinander anschließen.

7. Elektrischer Zigarrenanzünder nach einem der vorhergehenden Ansprüche, dadurch gekennzeichnet, daß die Beleuchtungshülse (2) becherförmig ausgebildet ist, wobei die Hülsenwandung (10) und ein Becherboden (11) die Anzündersteckdose (4) umfassen.

8. Elektrischer Zigarrenanzünder nach Anspruch 7, dadurch gekennzeichnet, daß die Hülsenwandung (10) hohlzylinderförmig und der Becherboden (11) vollzylinderförmig ausgebildet ist.

9. Elektrischer Zigarrenanzünder nach einem der Ansprüche 7 bis 8, dadurch gekennzeichnet, daß eine Lampenaufnahme (19) für die Lampe (9) im Becherboden (11) vorgesehen ist.

10. Elektrischer Zigarrenanzünder nach einem der Ansprüche 7 bis 9, dadurch gekennzeichnet. daß die becherförmige Beleuchtungshülse (2) gleichzeitig als Anzündersteckdose (4) ausgebildet ist.

**Fig. 2**

**Fig. 1**

Fig. 3

Fig. 4